# EUROPEAN PATENT SPECIFICATION

(11) **EP 3 100 852 B1**
(45) Date of publication and mention of the grant of the patent: **15.11.2017**
(21) Application number: 16172728.4
(22) Date of filing: 02.06.2016
(51) Int. Cl.: B32B 5/10, B32B 5/26, B32B 7/12, B32B 7/14, B32B 3/08, B32B 3/28, B32B 1/00, B64C 1/00

(54) **A CURVED LAMINATED STRUCTURE**
GEBOGENE LAMINIERTE STRUKTUR
STRUCTURE STRATIFIÉE COURBÉE

(30) Priority: 03.06.2015 TR 201506773
(43) Date of publication of application: 07.12.2016
(73) Proprietor: Tusas-Türk Havacilik Ve Uzay Sanayii A.S., 06980 Ankara (TR)
(72) Inventor: GOZLUKLU, Burak, 06980 Ankara (TR); COKER, Demirkan, 06980 Ankara (TR)
(74) Representative: Cayli, Hülya

(56) References cited:
- EP-A1- 1 419 875
- EP-A1- 2 233 625
- EP-A1- 2 248 785
- EP-A1- 2 666 622
- WO-A1-03/022677
- WO-A1-2015/163764
- WO-A2-2009/140555
- WO-A2-2014/147222
- US-A- 4 992 317

## Description

### Technical field

The present invention relates to a structure designed to prevent formation of delamination in curved laminated structures, especially those used in aviation field, and propagation of the delamination crack formed.

### Background Art

Particularly, in aviation sector, in a bend of a component with L-geometry bearing heavy loads such as beams, slats etc. which are for instance used in the manufacture of aircrafts, and in a bend of a curved structure such as flanges, brackets etc. which are used in assembling the components that form the aircraft structure, tensile stress created perpendicular to the layers forming said components may cause formation of delaminations (interlaminar cracks). Said delamination cracks propagate through the layers and may result in a complete separation of the layers and sudden breakage of the component. In order to reinforce composite curved structures against delamination, a higher number of layers are used, which results in an unnecessary weight increase in aircraft structures. Furthermore, various structures have been currently developed in order to prevent formation of delamination and to retard/inhibit propagation of the delamination crack formed.

A component, being an example of these structures, is disclosed in US2010284810A1. On its layers, said component includes fibrous elements lying in the direction of an axis. A preform of the component is formed by laying-up prepreg layers on the said layers. The fibrous elements are laid-up so that they lie in planes that are not perpendicular to the axis of curvature of the bend of the component and said layers traverse the fibrous elements. However, although formation of delamination between the component and its layers is delayed, in case a delamination crack is formed, propagation of said crack through the layer may not be prevented. Also, the fibrous elements of the component disclosed in the said document that are homogenously distributed and work at micro level do not alter the distribution of load. Therefore, the component in US2010284810A1 cannot be provided with sufficient strength to resist against heavy loads. Furthermore, the structure disclosed in the said document does not provide a countermeasure against formation of a region prone to formation of delamination induced by load concentration in the region of a bend that is close to the fasteners in case the structure is mounted to a further structure by means of fasteners such as rivets/bolts. Another prior art document JP2011074207A discloses a fiber-reinforced composite material. In the said document, a fiber bundle layer is obtained by bonding laminated fibers to each other by helical fibers. Said helical fibers hold the fiber bundle layer together and support the material, thereby reinforcing the structure of the material against delamination. However, said helical fibers continuously changes direction and they are used to support fiber bundle layer that carries loads, instead of being the main load-carrier. In other words, helical fibers reinforce the fiber bundle layer, i.e. the inner structure of the material, which reinforcement is especially in the direction of thickness (interlaminar) and the inventive helical fibers cannot alter the distribution of load on the entire component. Therefore, the invention in JP2011074207A cannot effectively prevent formation of delamination and propagation of the delamination crack formed. Additionally, JP2011074207A is silent about prevention of formation of a region prone to delamination in the connection regions where fasteners are used, especially in a bend of the material, in the event that the material is mounted to a further structure by means of fasteners. EP2233625 discloses a curved laminated structure suitable for use in aviation industry comprising at least three layers, characterized by comprising auxiliary weft yarns consisting of unidirectional fibers, which are positioned at an upper side of one intermediate layer facing an outer layer and on the curved laminated structure in the longitudinal direction. Due to the above-identified reasons, with the present invention, there is provided a curved laminated structure wherein structural reinforcement is ensured, formation of delamination is, in any case, prevented by reducing the tensile stress applied on the bend through an alteration in the distribution of loads on the bend, and in case delamination is formed, propagation of said delamination crack is slowed down.

### Brief Description of the Invention

With the present invention, there is provided a curved laminated structure suitable for use in aviation industry comprising at least one upper layer positioned on the inner radius surface, at least one lower layer positioned on the outer radius surface of the curved laminated structure, and at least one intermediate layer positioned between the said upper layer and lower layer. The inventive curved laminated structure comprises at least one fiber bundle consisting of unidirectional fibers, which is positioned at an upper side of the intermediate layer facing the outer layer and on the curved laminated structure in longitudinal direction, in order to ensure strength, by means of elongation stiffness, against deformation induced by the growth of an inner angle in the region of a bend of the said curved laminated structure and resulting from a tensile force applied on the curved laminated structure; and at least one adhesive tape lying on the bend of the curved laminated structure and on the intermediate layer, along the width of the curved laminated structure, in order to prevent propagation of a possible delamination crack within the said curved laminated structure and between the layers.

With the curved laminated structure according to the present invention, formation of delamination is prevented at the bend region, and also in case of formation of a possible delamination crack, propagation of the same is prevented. In addition, since the inventive structure is light-weighted and resistant, the curved laminated structure is suitable for use in aviation industry. The present invention appears to be a solution that is readily applicable to the current civil composite aircrafts in that the invention includes technologies that may be produced by conventional methods and are certifiable for civil authorities.

### Object of the Invention

An object of the present invention is to provide a curved laminated structure suitable for use in aviation field, wherein formation of delamination in a bend thereof is prevented.

Another object of the present invention is to provide a curved laminated structure wherein in case of a delamination crack in a bend, said delamination crack is prevented from propagating between the layers and through the curved laminated structure.

Another object of the present invention is to provide a curved laminated structure which homogenizes and thus reduces, along the width of the curve, the tensile stress concentrated especially on a bend, in order to prevent formation of delamination.

Another object of the present invention is to provide a curved laminated structure which is resistant and light-weighted.

A further object of the present invention is to provide a curved laminated structure which prevents formation of delamination in areas close to a connection hole positioned in the region of a bend and used especially in aircraft structures for montage of aircraft structures.

Another object of the present invention is to provide a curved laminated structure which is easy-to-implement since it consists of primary and basic technologies, which is approved by the civil aviation authorities and which reduces the risk of delamination formation.

Another object of the present invention is to provide a curved laminated structure which is cost-effective and light-weighted since the material used for the reinforcement is not used on the entire structure, but on a small section thereof.

Another object of the present invention is to provide a curved laminated structure wherein an undesirable increase in the size of the structure due to the material used for reinforcement of the structure is prevented.

Still another object of the present invention is to provide a curved laminated structure which is easy-to-manufacture and inexpensive due to the fact that the materials therein are commonly used materials, and which may be granted flight certification by the aviation authorities since it consists of relatively low technologies.

### Description of the Drawings

The illustrative embodiments of the curved laminated structure according to the present invention are illustrated in the accompanying drawings, in which:
Figure 1 is a perspective view of the curved laminated structure according to the present invention.
Figure 2 is a perspective view of the fiber bundle used in the curved laminated structure as well as a sectional view thereof showing the fiber density of the bundle.
Figure 3 is another perspective view of the curved laminated structure showing the adhesive tapes used in the curved laminated structure.
Figure 4 is a side sectional view of a bend region of the curved laminated structure showing the adhesive tapes.
Figure 5 is a frontal view of a prior art curved laminated structure assembled using fasteners, and a graphic showing the distribution, along the width of the curve (Y-axis), of radial opening stress (σᵣ) generated in the curve under a tensile force applied thereto.
Figure 6 is a frontal view of the inventive curved laminated structure assembled using fasteners, and a graphic showing the distribution, along the width of the curve (Y-axis), of a radial stress (σᵣ) generated in the curve under a tensile force applied thereto.

All the parts illustrated in the drawings are individually assigned a reference numeral and the corresponding terms of these numbers are listed as follows:

| | |
|---|---|
| Curved laminated structure | (D) |
| Upper layer | (D1) |
| Lower layer | (D2) |
| Intermediate layer | (D3) |
| Connection hole | (D4) |
| Fiber bundle | (1) |
| Adhesive tape | (2) |
| Fastener | (3) |

### Description of the Invention

Currently, in a bend of multi-layered components exposed to heavy loads such as slats, beams etc. which are especially used in the aircraft industry, and/or in a bend of curved laminated structures with L-geometry such as flanges, brackets etc. used in assembling the aircraft components using fasteners, interlaminar delamination cracks are formed resulting from the tensile stress. These cracks are formed when the radial opening stresses generated under the load in the bend region of the curved structure exceed the value of the critical interface (interlaminar) opening stress which is one of the fracture values of the material. Said opening stresses exceed the critical value especially in the bend region due to the load concentration, thereby leading to delamination. As long as the delamination cracks are exposed to said tensile force, they may propagate within the layer and cause a complete separation of the layers so that the curved laminated structure may become useless. This delamination propagation depends on the interlaminar (interface) toughness value (the amount of energy required per unit crack elongation), which is low in the prior art. With the present invention, there is provided a curved laminated structure which is cost effective and easy-to-implement wherein not only formation of interlaminar delamination resulting from the tensile force applied on an axis perpendicular to the layers is prevented, but also in case of a delamination crack, said crack is prevented/obstructed from propagating within the layer.

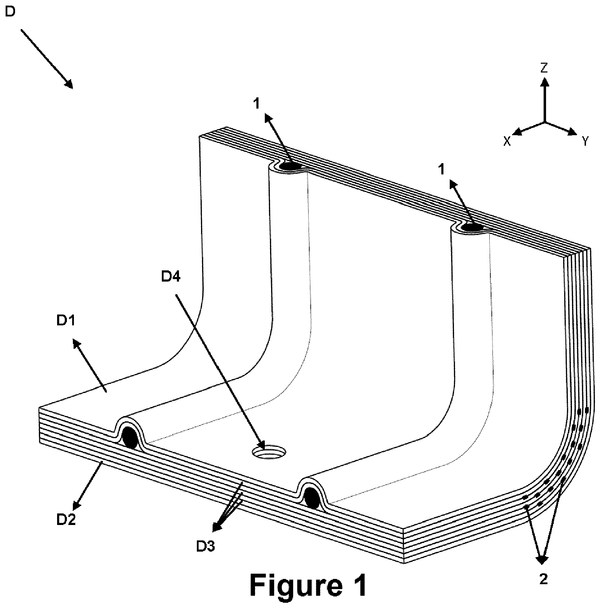

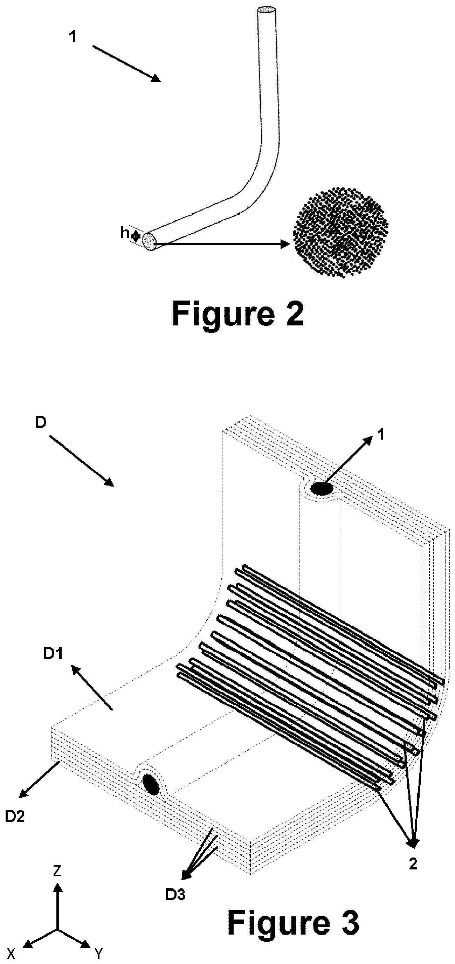

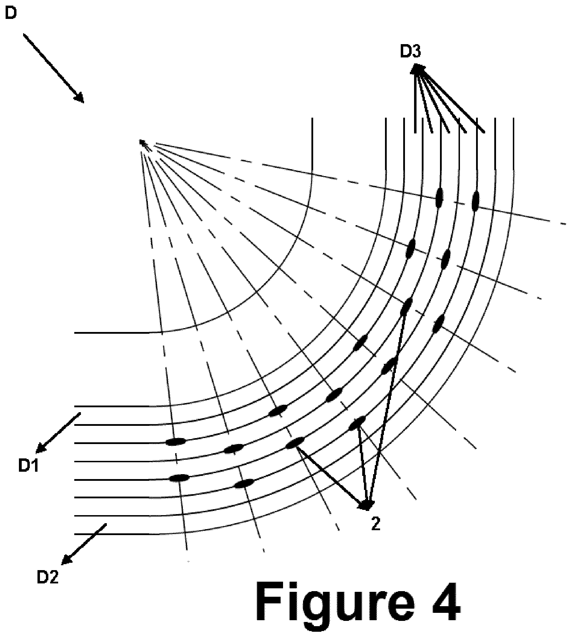

The curved laminated structure (D) according to the present invention, the exemplary embodiments of which are illustrated in figures 1-4 and figure 6, is suitable for use in aviation industry and comprises at least one upper layer (D1) positioned on the inner radius surface of the curved laminated structure (D) (i.e. on the convex side of the radius facing the outer environment), at least one lower layer (D2) positioned on the outer radius surface of the curved laminated structure (D) (i.e. on the concave side of the radius facing the outer environment), and at least one intermediate layer (D3) positioned between the said upper layer (D1) and lower layer (D2). The curved laminated structure (D) according to the present invention also comprises at least one fiber bundle (1) consisting of unidirectional fibers (which do not change their direction along the curved laminated structure (D), i.e. positioned parallel to each other), which is positioned at an upper side of the intermediate layer (D3) facing the outer layer (D1) and on the curved laminated structure (D) in the longitudinal direction, which preferably lies along the curved laminated structure (D) and preferably located close to the inner surface of the radius (i.e. positioned such that it is closer to the upper layer (D1) than the lower layer (D2)), in order to ensure strength, by means of elongation stiffness, against deformation induced by the growth of an inner angle in the region of a bend of the said curved laminated structure (D) and resulting from a tensile force applied on the curved laminated structure (D); and at least one adhesive tape (2) lying on the bend region of the curved laminated structure (D) and on the intermediate layer (D3), along the width of the curved laminated structure (D), in order to prevent propagation of a possible delamination crack within the said curved laminated structure (D) and between the layers. Said fiber bundle (1) extends against the tensile force applied to the curved laminated structure (D) along a Z-axis shown in figure 1 (in the longitudinal direction of the curved laminated structure (D)) and obstructs opening deformation of the curved laminated structure (D), thereby increasing the mechanical load required for the formation of delamination. An aim is to increase the strength of the curved laminated structure (D) against opening deformation (the growth of the bend angle) by making the fiber bundle (1) laid longitudinally on the curved laminated structure (D) highly resistant against the opening deformation. In the architecture of the present invention, the fiber bundle (1) which is preferably positioned close to the inner radius is exposed to positive strain under the opening deformation, and resistance is obtained against delamination formation due to the stiffness of the fiber bundle (1) against said strain in the elongation direction. In addition to the delamination formation, said adhesive tape (2) increases the interlaminar (interface) toughness value - at point level, and when a delamination crack formed and propagates on the intermediate layer (D3) meets with the adhesive tape (2), it prevents further propagation of the said delamination crack and/or obstructs propagation thereof in order to prevent sudden breakage of the structure. By using said fiber bundle (1) and the adhesive tape (2), the curved laminated structure (D) is made tolerant to damages, and since a weight increase in the structure is low and relatively simple technologies are employed, a curved laminated structure (D) is obtained which is suitable for use in aircraft industry. Consequently, a curved laminated structure (D) is realized which is double resistant to delamination since damage tolerance is created due to the fact that it is resistant to the formation of delamination and also it prevents propagation of the delamination formed.

In an alternative embodiment of the invention as shown in figure 1, the curved laminated structure (D) comprises at least one connection hole (D4) used for montage of the curved laminated structure (D) to other aircraft structures, for example, and in this embodiment, at least one fiber bundle (1) is positioned on at least one side of the said connection hole (D4) such that it preferably lies along the curved laminated structure (D), and at least another fiber bundle (1) is positioned on the other side of the said connection hole (D4) such that it preferably lies along the curved laminated structure (D). Said fiber bundles (1) are preferably positioned parallel to each other. Due to the elongation stiffness created by the laid-down fiber bundles (1) and the additional inertia created, the curved laminated structure (D) is reinforced against the formation of delamination. In an embodiment wherein the curved laminated structure (D) comprises at least two connection holes (D4), said connection holes (D4) alter the distribution of load due to the local stiffness that will be created by the fiber bundles (1) and reduce the concentration of the critical opening stress, thereby creating a more homogenous distribution of the opening stress along the width of the curved laminated structure (D). Thus, formation of a region prone to delamination at the periphery of the connection hole (D4) is eliminated.

In another preferred embodiment of the invention, the curved laminated structure (D) comprises at least two fiber bundles (1) positioned parallel to each other. In this embodiment, with the unidirectional positioning of the fiber bundles (1) lying longitudinally along the intermediate layer (D3) and positioned parallel to each other, a curved laminated structure (D) is obtained which is more resistant to the formation of delamination.

In another preferred embodiment, the curved laminated structure (D) comprises at least two intermediate layers (D3) and at least two adhesive tapes (2). In this embodiment, one of the adhesive tapes (2) is disposed on one of the said intermediate layers (D3) whereas the other one of the said adhesive tapes (2) is disposed on the other one of the said intermediate layers (D3) such that they are not aligned. In this manner, the adhesive tapes (2) are homogenously distributed along the thickness of the curved laminated structure (D), and also the adhesive tapes (2) are prevented from increasing the thickness of the curved laminated structure (D) to an undesirable extent. Thus, a structure is achieved which is weight-effective and tolerant to damages. In another embodiment, the adhesive tapes (2) are positioned in a spaced manner at the bend region of the intermediate layer (D3) of the curved laminated structure (D), not on the entire surface thereof, in order to keep the weight increase at a low level at the end of the reinforcement so that an increase in weight arising from the adhesive tapes (2) is minimized and also in case of a delamination, propagation of said delamination is prevented.

In a preferred embodiment of the invention, the curved laminated structure (D) comprises at least two adhesive tapes (2), and said tapes are positioned on the intermediate layer (D3) such that there is a distance between them ranging from 20% of the thickness of the curved laminated structure (D) to 50% of the thickness of the curved laminated structure (D). In this way, delamination cracks smaller than 20% of the thickness of the curved laminated structure (D) which are formed in the curved laminated structure (D) are recognized by the curved laminated structure (D) and propagation of said small cracks is prevented. These values are recommended values and may vary depending on the material to be used and on the production method.

In a preferred embodiment, the thickness of the fiber bundle (1) is, at least, half of the thickness of a layer and at most half of the thickness of the total curved laminated structure (D). In this embodiment, said layer may be the upper layer (D1), the lower layer (D2) or the intermediate layer (D3). In this embodiment, additional strength is created because of the camber that will be created by the relatively thick fiber bundle (1) and the upper layer (D1). In this way, another factor is obtained in the curved laminated structure (D) which prevents formation of delamination.

In another preferred embodiment of the invention, said upper layer (D1), lower layer (D2) and intermediate layer (D3) may preferably contain carbon fiber, glass fiber, aramid fiber, boron fiber, thermoplastic resin and/or thermoset resin. In another embodiment, the fiber bundle (1) may contain carbon fiber, glass fiber, aramid fiber, and boron-based fiber of higher density than that of the material from which the layers forming the curved laminated structure (D) are made, and a lower amount of thermoplastic resin and/or thermoset resin than the amount of the material from which the layers forming the curved laminated structure (D) are made.

In another embodiment of the invention, the curved laminated structure (D) comprises at least one adhesive member (not shown) interposed between the fiber bundle (1) and the intermediate layer (D3) in order to fasten the fiber bundle (1) to the intermediate layer (D3). In this manner, the fiber bundle (1) is stably attached to the intermediate layer (D3).

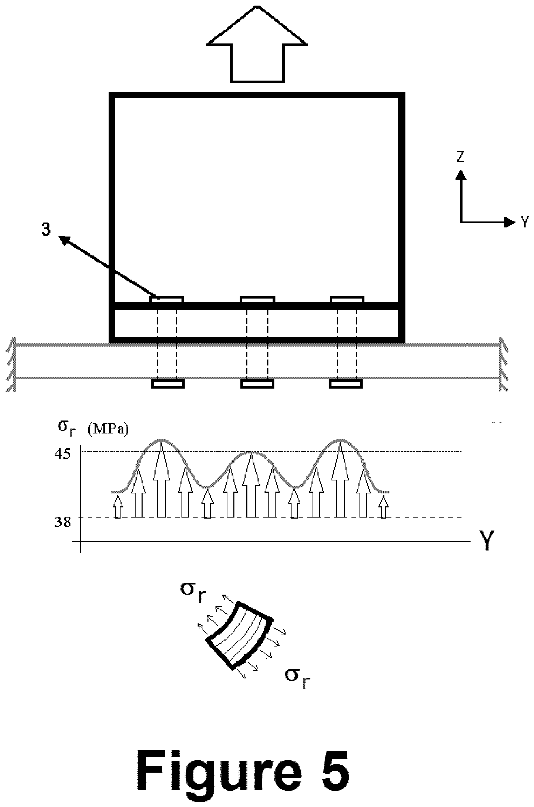

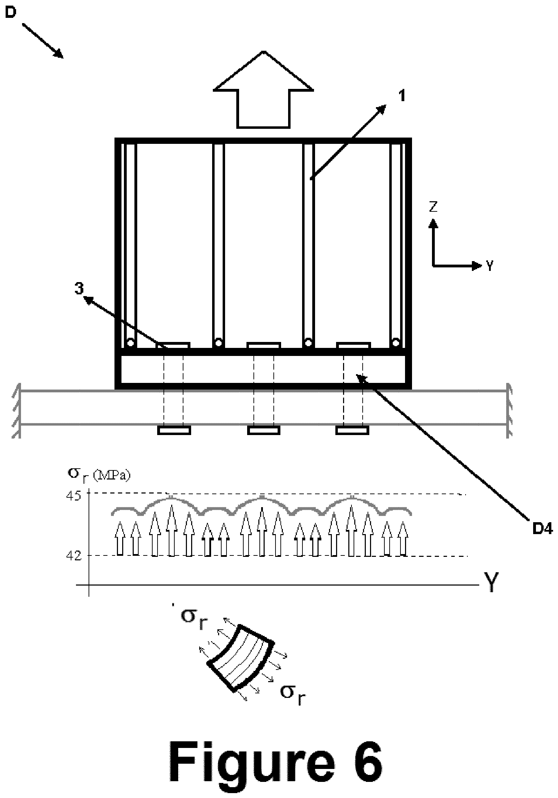

In figure 5, a tension test is shown applied to a prior art curved structure assembled using three fasteners (3) that have passed through the holes positioned on a test apparatus, which structure having a thickness of 3 mm, including 12 layers in total and having an inner radius of 5 mm and a length of 10 mm and comprising carbon fiber and resin. As shown in the graphic in figure 5, it is observed that at the areas close to the fasteners (3), the intensity of the opening stress that causes delamination exceeds the value of the critical opening stress that is in the order of 45 MPa. It is also observed that the distribution of stress through the structure is approximately in the range of 38 MPa to 45 MPa. Furthermore, in figure 6, a tension test is shown which is applied to an illustrative curved laminate structure (D) according to the invention assembled on a test apparatus by means of the fasteners (3) that have passed through the connection holes (D4) thereon. The exemplary curved laminated structure (D) to which said test is applied has a thickness of 3 mm, includes 12 layers in total and has an inner radius of 5 mm and a length of 10 mm and comprises carbon fiber and resin. As shown in the graph, in the curved laminated structure (D) according to the present invention, the distribution of opening stress in the curved laminated structure (D) which is created around the connection holes (D4) varies in the range of 42 MPa to 44 MPa, and when compared to the results in figure 5, the distribution of force in the curved laminated structure (D) according to the present invention is performed in a more homogenous manner, and especially the amplitude of stress created around the connection holes (D4) is reduced below the critical value of 45 MPa. In this way, the problem of delamination is minimized which is experienced around the connection hole (D4) and induced by the stress concentration.

Thanks to its fiber bundle (1), the curved laminated structure (D) according to the present invention is rendered more resistant to the opening loads and formation of delamination is prevented, and thanks to its adhesive tape (2), rapid propagation of the delamination and thus an abrupt damage to the component is prevented. Furthermore, with the strength-increasing materials added (the fiber bundle (1) and adhesive tape (2)), an undesired increase in the weight and volume of the curved laminated structure (D) is prevented so that a curved laminated structure (D) is obtained which is suitable for use in aviation sector. Unlike the new technological applications which are found to be risky by the aviation authorities, said invention provides a solution that is easily applicable to the systems used especially in the civil aviation industry, due to its simple technologies.

## Claims

1. A curved laminated structure (D) suitable for use in aviation industry comprising at least one upper layer (D1) positioned on the inner radius surface, at least one lower layer (D2) positioned on the outer radius surface of the curved laminated structure (D), and at least one intermediate layer (D3) positioned between the said upper layer (D1) and lower layer (D2), **characterized by** comprising:
- at least one fiber bundle (1) consisting of unidirectional fibers, which is positioned at an upper side of the intermediate layer (D3) facing the outer layer (D1) and on the curved laminated structure (D) in the longitudinal direction, in order to ensure strength, by means of elongation stiffness, against deformation induced by the growth of an inner angle in the region of a bend of the said curved laminated structure (D) and resulting from a tensile force applied on the curved laminated structure (D), and
- at least one adhesive tape (2) lying on the bend region of the curved laminated structure (D) and on the intermediate layer (D3), along the width of the curved laminated structure (D), in order to prevent propagation of a possible delamination crack within the said curved laminated structure (D) and between the layers.

2. A curved laminated structure (D) according to claim 1, **characterized in that** said fiber bundle (1) lies along the curved laminated structure (D).

3. A curved laminated structure (D) according to claim 1, **characterized in that** the fiber bundle (1) is positioned such that it is closer to the inner surface of the radius of the curved laminated structure (D) than the outer surface of the radius.

4. A curved laminated structure (D) according to claim 1, **characterized by** comprising at least one connection hole (D4) used for montage purposes, at least one fiber bundle (1) positioned on at least one side of the said connection hole (D4), and at least another fiber bundle (1) positioned on at least another side of the said connection hole (D4).

5. A curved laminated structure (D) according to claim 4, **characterized in that** the fiber bundle (1) positioned on one side of the said connection hole (D4) is positioned such that it lies along the curved laminated structure (D).

6. A curved laminated structure (D) according to claim 4, **characterized in that** said another fiber bundle (1) positioned on another side of the said connection hole (D4) is positioned such that it lies along the curved laminated structure (D).

7. A curved laminated structure (D) according to claim 4, **characterized in that** the fiber bundles (1) are positioned parallel to each other.

8. A curved laminated structure (D) according to claim 1, **characterized by** comprising at least two fiber bundles (1) positioned parallel to each other.

9. A curved laminated structure (D) according to claim 1, **characterized by** comprising at least two intermediate layers (D3).

10. A curved laminated structure (D) according to claim 1 or 9, **characterized by** comprising at least two adhesive tapes (2).

11. A curved laminated structure (D) according to claim 10, **characterized in that** one of the adhesive tapes (2) is positioned on one of the intermediate layers (D3) whereas the other one of the adhesive tapes (2) is positioned on the other one of the intermediate layers (D3) such that they are not aligned.

12. A curved laminated structure (D) according to claim 10, **characterized in that** the adhesive tapes (2) are positioned in a spaced manner at the bend region of the curved laminated structure (D).

13. A curved laminated structure (D) according to claim 10, **characterized in that** said adhesive tapes (2) are positioned on the intermediate layer (D3) such that there is a distance between them ranging from 20% of the thickness of the curved laminated structure (D) to 50% of the thickness of the curved laminated structure (D).

14. A curved laminated structure (D) according to claim 1, **characterized by** comprising at least one adhesive member interposed between the fiber bundle (1) and the intermediate layer (D3) in order to fasten the fiber bundle (1) to the intermediate layer (D3).

15. A curved laminated structure (D) according to claim 1, **characterized in that** the thickness of the fiber bundle (1) is, at least, half of the thickness of a layer and at most half of the thickness of the total curved laminated structure (D).

16. A curved laminated structure (D) according to claim 1, **characterized in that** the density of the material contained in the fiber bundle (1) is higher than that of the material from which the layers forming the curved laminated structure (D) are made.

## Patentansprüche

1. Gekrümmte laminierte Struktur (D), die zur Verwendung in der Luftfahrtindustrie geeignet ist, mit wenigstens einer oberen Lage (D), die an der Innenradiusoberfläche liegt, wenigstens einer unteren Lage (D2), die an der Außenradiusoberfläche der gekrümmten laminierten Struktur liegt, und wenigstens einer Zwischenlage (D3), die zwischen der oberen Lagen (D1) und der unteren Lage (D2) liegt, **gekennzeichnet durch**:
- wenigstens ein Faserbündel (1) bestehend aus unidirektionalen Fasern, das an einer Oberseite der Zwischenschicht (D3), die der äußeren Lage (D1) zugewandt ist, und in Längsrichtung auf der gekrümmten laminierten Struktur (D) positioniert ist, um, durch Längssteifigkeit, Festigkeit gegen Deformationen sicherzustellen, die durch Anwachsen eines Innenwinkels in dem Bereich einer Krümmung der gekrümmten laminierten Struktur (D) induziert werden und die aus einer auf die gekrümmte laminierte Struktur (D) ausgeübten Zugkraft resultieren, und
- wenigstens ein Klebeband (2), das auf dem gekrümmten Bereich der gekrümmten laminierten Struktur (D) und auf der Zwischenlage (D3) liegt, entlang der Breite der gekrümmten laminierten Struktur (D), um die Ausbreitung eines möglichen Delaminierungsrisses innerhalb der gekrümmten laminierten Struktur (D) und zwischen den Lagen zu verhindern.

2. Gekrümmte laminierte Struktur (D) nach Anspruch 1, **dadurch gekennzeichnet, dass** das Faserbündel (1) entlang der gekrümmten laminierten Struktur (D) liegt.

3. Gekrümmte laminierte Struktur (D) nach Anspruch 1, **dadurch gekennzeichnet, dass** das Faserbündel (1) so positioniert ist, dass es näher an der Innenradiusoberfläche der gekrümmten laminierten Struktur (D) als an der Außenradiusoberfläche liegt.

4. Gekrümmte laminierte Struktur (D) nach Anspruch 1, **dadurch gekennzeichnet, dass** sie wenigstens ein Verbindungsloch (D4), das für Montagezwecke verwendet wird, wenigstens ein Faserbündel (1), das auf wenigstens einer Seite des Verbindungslochs (D4) positioniert ist, und wenigstens ein anderes Faserbündel (1) aufweist, das auf wenigstens einer anderen Seite des Verbindungslochs (D4) positioniert ist.

5. Gekrümmte laminierte Struktur (D) nach Anspruch 4, **dadurch gekennzeichnet, dass** das auf einer Seite des Verbindungslochs (D4) positionierte Faserbündel (1) so positioniert ist, dass es entlang der gekrümmten laminierten Struktur (D) liegt.

6. Gekrümmte laminierte Struktur (D) nach Anspruch 4, **dadurch gekennzeichnet, dass** das auf einer anderen Seite des Verbindungslochs (D4) positionierte andere Faserbündel (1) so positioniert ist, dass es entlang der gekrümmten laminierten Struktur (D) liegt.

7. Gekrümmte laminierte Struktur (D) nach Anspruch 4, **dadurch gekennzeichnet, dass** sie wenigstens zwei parallel zueinander positionierte Faserbündel (1) aufweist.

8. Gekrümmte laminierte Struktur (D) nach Anspruch 1, **dadurch gekennzeichnet, dass** wie wenigstens zwei parallel zueinander positionierte Faserbündel (1) aufweist.

9. Gekrümmte laminierte Struktur (D) nach Anspruch 1, **dadurch gekennzeichnet, dass** sie wenigstens zwei Zwischenlagen (D3) aufweist.

10. Gekrümmte laminierte Struktur (D) nach Anspruch 1 oder 9, **dadurch gekennzeichnet, dass** sie wenigstens zwei Klebebänder (2) aufweist.

11. Gekrümmte laminierte Struktur (D) nach Anspruch 10, **dadurch gekennzeichnet, dass** eines der Klebebänder (2) auf einer der Zwischenlagen (D3) positioniert ist, während das andere der Klebebänder (2) auf der anderen der Zwischenlagen (D3) so positioniert ist, dass sie nicht zueinander ausgerichtet sind.

12. Gekrümmte laminierte Struktur (D) nach Anspruch 10, **dadurch gekennzeichnet, dass** die Klebebänder (2) auf Abstand zueinander im Krümmungsbereich der gekrümmten laminierten Struktur (D) positioniert sind.

13. Gekrümmte laminierte Struktur (D) nach Anspruch 10, **dadurch gekennzeichnet, dass** die Klebebänder (2) auf der Zwischenlage (D3) so positioniert sind, dass ein Abstand zwischen ihnen im Bereich von 20% der Dicke der gekrümmten laminierten Struktur (D) bis 50% der Dicke der gekrümmten laminierten Struktur (D) liegt.

14. Gekrümmte laminierte Struktur (D) nach Anspruch 1, **dadurch gekennzeichnet dass** sie wenigstens ein Klebeelement aufweist, das zwischen dem Faserbündel (1) und der Zwischenlage (D3) eingesetzt ist, um das Faserbündel (1) an der Zwischenlage (D3) zu befestigen.

15. Gekrümmte laminierte Struktur (D) nach Anspruch 1, **dadurch gekennzeichnet, dass** die Dicke des Faserbündels (1) wenigstens die Hälfte der Dicke einer Lage und höchstens die Hälfte der Dicke der gesamten gekrümmten laminieren Struktur (D) beträgt.

16. Gekrümmte laminierte Struktur (D) nach Anspruch 1, **dadurch gekennzeichnet, dass** die Dichte des in dem Faserbündel (1) enthaltenen Materials höher als die des Materials ist, aus dem die Lagen, die die gekrümmte laminierte Struktur (D) bilden, hergestellt sind.

## Revendications

1. Structure stratifiée courbée (D) adaptée à une utilisation dans l'industrie de l'aviation comprenant au moins une couche supérieure (D1) positionnée sur la surface de rayon interne, au moins une couche inférieure (D2) positionnée sur la surface de rayon externe de la structure stratifiée courbée (D), et au moins une couche intermédiaire (D3) positionnée entre lesdites couche supérieure (D1) et couche inférieure (D2), **caractérisée en ce qu'**elle comprend :
- au moins un faisceau de fibres (1) constitué de fibres unidirectionnelles, qui est positionné au niveau d'un côté supérieur de la couche intermédiaire (D3) faisant face à la couche externe (D1) et sur la structure stratifiée courbée (D) dans la direction longitudinale, afin d'assurer une résistance, au moyen d'une rigidité en allongement, contre la déformation induite par la croissance d'un angle interne dans la région d'un coude de ladite structure stratifiée courbée (D) et résultant d'une force de traction appliquée sur la structure stratifiée courbée (D), et
- au moins une bande adhésive (2) située sur la région coudée de la structure stratifiée courbée (D) et sur la couche intermédiaire (D3), le long de la largeur de la structure stratifiée courbée (D), afin de prévenir la propagation d'une éventuelle fissure de délamination à l'intérieur de ladite structure stratifiée courbée (D) et entre les couches.

2. Structure stratifiée courbée (D) selon la revendication 1, **caractérisée en ce que** ledit faisceau de fibres (1) se situe le long de la structure stratifiée courbée (D).

3. Structure stratifiée courbée (D) selon la revendication 1, **caractérisée en ce que** le faisceau de fibres (1) est positionné de manière à ce qu'il soit plus proche de la surface interne du rayon de la structure stratifiée courbée (D) que de la surface externe du rayon.

4. Structure stratifiée courbée (D) selon la revendication 1, **caractérisée en ce qu'**elle comprend au moins un trou de liaison (D4) utilisé à des fins de montage, au moins un faisceau de fibres (1) positionné sur au moins un côté dudit trou de liaison (D4), et au moins un autre faisceau de fibres (1) positionné sur au moins un autre côté dudit trou de liaison (D4).

5. Structure stratifiée courbée (D) selon la revendication 4, **caractérisée en ce que** le faisceau de fibres (1) positionné sur un côté dudit trou de liaison (D4) est positionné de manière à ce qu'il se situe le long de la structure stratifiée courbée (D).

6. Structure stratifiée courbée (D) selon la revendication 4, **caractérisée en ce que** ledit autre faisceau de fibres (1) positionné sur un autre côté dudit trou de liaison (D4) est positionné de manière à ce qu'il se situe le long de la structure stratifiée courbée (D).

7. Structure stratifiée courbée (D) selon la revendication 4, **caractérisée en ce que** les faisceaux de fibres (1) sont positionnés parallèlement les uns aux autres.

8. Structure stratifiée courbée (D) selon la revendication 1, **caractérisée en ce qu'**elle comprend au moins deux faisceaux de fibres (1) positionnés parallèlement les uns aux autres.

9. Structure stratifiée courbée (D) selon la revendication 1, **caractérisée en ce qu'**elle comprend au moins deux couches intermédiaires (D3).

10. Structure stratifiée courbée (D) selon la revendication 1 ou 9, **caractérisée en ce qu'**elle comprend au moins deux bandes adhésives (2).

11. Structure stratifiée courbée (D) selon la revendication 10, **caractérisée en ce que** l'une des bandes adhésives (2) est positionnée sur l'une des couches intermédiaires (D3) tandis que l'autre des bandes adhésives (2) est positionnée sur l'autre des couches intermédiaires (D3) de manière à ce qu'elles ne soient pas alignées.

12. Structure stratifiée courbée (D) selon la revendication 10, **caractérisée en ce que** les bandes adhésives (2) sont positionnées de manière espacée au niveau de la région coudée de la structure stratifiée courbée (D).

13. Structure stratifiée courbée (D) selon la revendication 10, **caractérisée en ce que** lesdites bandes adhésives (2) sont positionnées sur la couche intermédiaire (D3) de manière à ce qu'il existe une distance entre elles allant de 20 % de l'épaisseur de la structure stratifiée courbée (D) à 50 % de l'épaisseur de la structure stratifiée courbée (D).

14. Structure stratifiée courbée (D) selon la revendication 1, **caractérisée en ce qu'**elle comprend au moins un élément adhésif interposé entre le faisceau de fibres (1) et la couche intermédiaire (D3) afin de fixer le faisceau de fibres (1) à la couche intermédiaire (D3).

15. Structure stratifiée courbée (D) selon la revendication 1, **caractérisée en ce que** l'épaisseur du faisceau de fibres (1) est, au moins, la moitié de l'épaisseur d'une couche et au plus la moitié de l'épaisseur de la structure stratifiée courbée (D) totale.

16. Structure stratifiée courbée (D) selon la revendication 1, **caractérisée en ce que** la densité du matériau contenu dans le faisceau de fibres (1) est supérieure à celle du matériau à partir duquel les couches formant la structure stratifiée courbée (D) sont fabriquées.
